# EUROPEAN PATENT APPLICATION

(11) **EP 2 138 324 A2**
(43) Date of publication of application: **30.12.2009**
(21) Application number: 09163461.8
(22) Date of filing: 23.06.2009
(51) Int. Cl.: B44F 9/04

(54) **Artificial stone and preparing method thereof**

(30) Priority: 26.06.2008 KR 20080060858
(71) Applicant: LG Chem, Ltd., Youngdungpo-gu Seoul 150-721 (KR)
(72) Inventor: Ko, Hae-Seung, Gyeonggi-do (KR); Park, Chang-Hwan, Chungcheongbuk-do (KR)
(74) Representative: HOFFMANN EITLE

(57) **Abstract**

The present invention relates to an artificial stone having a pattern formed on its surface by distributing chips having specific sizes therein, and a preparing method thereof. In accordance with the present invention, a pattern is formed by pouring chips mixed in a certain ratio into a mould in which a sieve having various designs is inserted, and vibrating said mould, so that only chips with a specific size can pass through the sieve, and thereby a creative appearance may be produced.

## Description

### [Technical Field]

The present invention relates to artificial stone having a pattern on its surface formed by distributing chips having a specific size therein, and a preparing method thereof. Specifically, the present invention relates to artificial stone having a pattern formed on its surface by passing chips having a specific size through a sieve with meshes of specific sizes formed in a specific pattern, and a preparing method thereof.

### [Background Art]

Generally, artificial stone, which is used as an interior or exterior material for buildings, is prepared by mixing cement with chips (colored granite or marble chips), solidifying the mixture, and polishing its upper surface with a grinder.

Artificial stone prepared by such a method has an advantage in that its surface is smooth, it has a beautiful appearance, and is strong. However, when chips having high strength are polished with a grinder, a long polishing time is required and the process must be carried out by spraying abrasive water at the polishing position, lest the resulting dust is scattered. Therefore, it is inconvenient in that the polishing procedure increases approximately 5 to 6 times. Also, there are problems in that chip colors are limited and it is hard to display specific patterns.

To solve said problems, a process was developed which comprises mixing a cement base with various natural rock chips to prepare an artificial stone slurry, and then treating the surface of the artificial stone after carrying out a pressing procedure. However, the chips have different sizes and are randomly arranged, and thus there is a problem in that it is hard to form beautiful patterns on the surface of an artificial stone.

Korean laid-open patent publication No. 2004-0076842 discloses a process for forming patterns on the surface of an artificial stone, whereby photographic paper is attached to the surface of the artificial stone.

However, this prior art is different from the present invention because patterns are formed on the surface of an artificial stone without using chips.

Korean laid-open patent publication No. 1996-0700910 discloses a process which comprises dropping the upper layer of two layers to form patterns on the under layer.

However, this prior art is also different from the present invention because pattern are formed without using chips.

### [Disclosure]

### [Technical Problem]

The present invention has been conceived to solve the above-mentioned problems in the prior art, and the object of the present invention is to provide a method for preparing artificial stone, which comprises: fixing a sieve to a mould and vibrating the mould to pass chips having a specific size through meshes of the sieve, having specific sizes corresponding to the sizes of the chips, whereby a pattern having a beautiful appearance may be formed on the surface of the artificial stone.

### [Technical Solution]

In order to achieve said object, according to one aspect of the present invention an artificial stone is provided, which comprises: a base part; and a plurality of pattern parts formed on a surface of said base part, wherein each pattern part is formed by chips having different sizes.

According to another aspect of the present invention, a method for preparing artificial stone is provided, which comprises the steps of: inserting a sieve into a mould and fixing it thereto, wherein the sieve consists of meshes having specific sizes and forming specific patterns; pouring raw materials of the artificial stone, including chips having a specific size, into the mould; and vibrating the mould to sieve the chips and transfer the sieve patterns to a surface of the artificial stone.

### [Advantageous Effects]

As described above, artificial stone according to the present invention has a creative appearance, and the preparing method thereof may provide a creative appearance and enhance the reliability of creating specific patterns.

### [Description of Drawings]

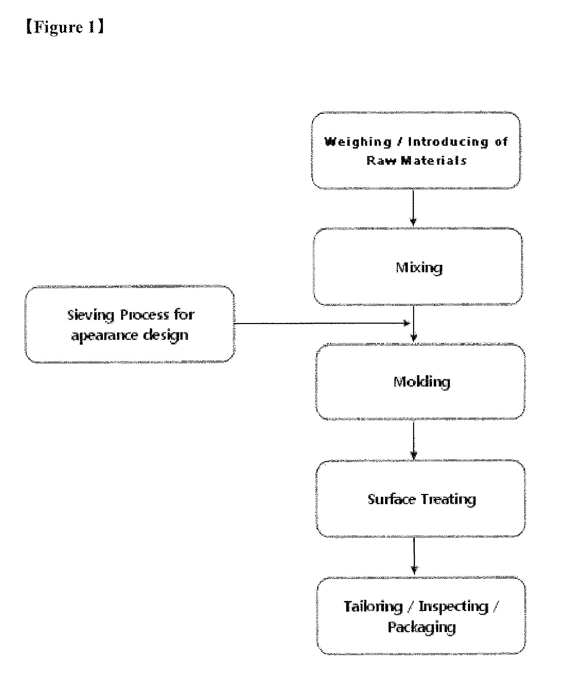

Figure 1 is a flowchart for preparing artificial stones according to the present invention, which consists of: weighing and introduction of raw materials, mixing, molding, surface treating, tailoring/inspecting/packaging steps, in chronological order.
Figure 2 shows schedule drawings of a process for preparing patterns on the surface of artificial stone using a mould, to which a sieve is attached, according to one embodiment of the present invention.
Figure 3 consists of photographs of products according to one embodiment of the present invention.

### [Best Mode]

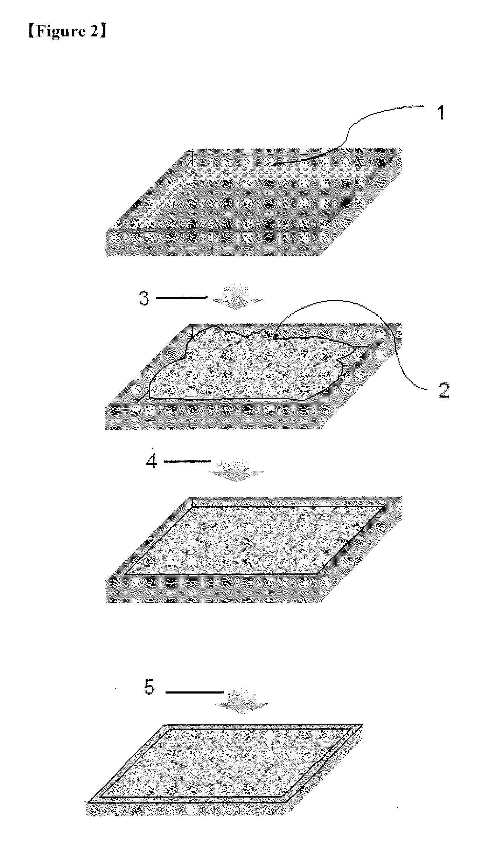

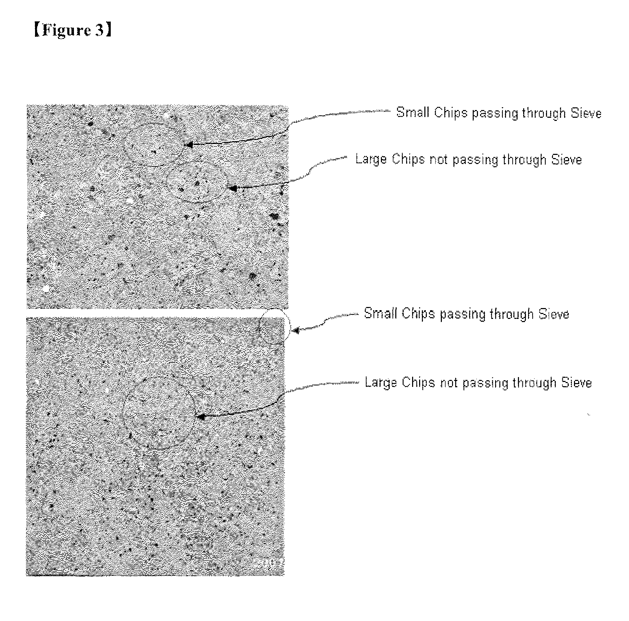

The present invention is explained in more detail below, with reference to the attached drawings. The attached drawings show exemplary aspects of the present invention, which are provided only for explaining the present invention in more detail, and do not restrict the technical scope of the present invention. The embodiments of the present invention have been described for illustrative purposes only, and it will be understood by one of ordinary skill in the art that various modifications, changes, and additions may be made thereto without departing from the spirit and scope of the present invention. All such modifications, changes, and additions should be regarded as being within the scope of the appended claims. Figure 2 shows procedures for preparing an artificial stone according to one embodiment of the present invention, and Figure 3 consists of photographs showing products according to one embodiment of the present invention.

The present invention relates to artificial stone comprising a base part and a plurality of pattern parts formed on a surface of said base part, wherein each pattern part formed on the surface is formed by chips having different sizes.

With reference to Figure 2, a method of forming patterns on a surface of an artificial stone with chips having a specific size comprises a step (2) of combining two or more chips having different sizes in a predetermined ratio into a cement base and a step (5) of pouring the base and the chips into a mould (1), wherein a sieve previously prepared and optionally designed is inserted, and vibrating (4) them so that the chips sink downwards.

Chips having a size larger than that of the meshes formed in the sieve become entangled with the sieve, and chips having a size smaller than that of the meshes pass through the meshes of the sieve.

Figure 3 consists of photographs showing artificial stones molded using such a sieve.

The sieve mesh size is represented by a unit of mesh, and may be controlled depending on patterns to be formed on the surfaces of artificial stones. The sieve may be formed by, for example, metals or nonferrous metals such as aluminum, or PE, PP, PU foams, and the like, without being limited to these.

In molding artificial stones, when a member capable of carrying out the function of a sieve is inserted into a mould, various patterns may be formed on surfaces of artificial stones depending on the sieve mesh shape.

On the one hand, when patterns are formed on edges of artificial stones, a method of attaching the sieve directly to the mould may be used. On the other hand, when patterns are formed in the center of artificial stones, it is hard to directly attach the sieve to the mould, and thus it may be attached to resin films such as PE, PP, PET and PVC, or mineral materials such as glass fiber, which are in turn attached to the bottom of the mould.

To form patterns on raw materials, wherein chips are mixed with cement bases, a vibrator is used after charging the raw materials of the artificial stone into a mould. Such a vibrator serves to sink chips having a size smaller than that of the sieve mesh to the bottom of the mould and to remove bubbles contained in the raw materials of the artificial stone at the same time.

Finally, artificial stones having various designs may be prepared by polishing the surface after curing and removing the mould.

The chips used herein may be PMMA resin chips; glass chips; color glass chips; natural rock chips pulverized from natural rocks; or colored natural rock chips made by coloring pulverized natural rocks.

Although the kinds of chips used in preparing artificial stones varies greatly, resin chips prepared by mixing the same resin as a base resin with an additive such as a pigment, curing the mixture and pulverizing the cured product ,or chips made from natural rocks such as rock powder or quartz may be used herein.

Such resin chips have excellent compatibility with a base resin. Also, natural rock chips having high strength such as rock powder or quartz have excellent abrasion resistance, but since they have high hardness, subsequent processes such as surface polishing may be required.

Natural materials used in the natural rock chips may be one or more selected from the group consisting of nacre, stone, rock powder, quartz, charcoal powder, yellow earth, magnet powder, perfume, pearl and mirror powder, but any natural rock chips may be used without being particularly restricted, as long as they may pass through the sieve meshes and form patterns on a surface of an artificial stone.

The amount of the added chips herein may be suitably selected depending on the desired appearance. Although it is not particularly restricted, chips are preferably added to the artificial stone according to the present invention in an amount of 200 to 400 parts by weight, and more preferably 240 to 350 parts by weight, relative to 100 parts by weight of a base resin.

The base resin used herein may be one or more selected from the group consisting of an acrylic resin, an epoxy resin, a melamine resin and an unsaturated polyester resin, but the base resin is not particularly restricted, as long as it is a resin having chemical resistance and contamination resistance.

Said acrylic resin may be formed from one or more monomers selected from the group consisting of a (meth)acrylic acid alkyl ester having 1 to 10 carbon atoms such as methyl(meth)acrylale or ethyl(meth)acrylate, benzyl(meth)acrylate and glycidyl(meth)acrylate, but it is not limited to these.

Said epoxy resin is also not particularly restricted, as long as it is usually used in this field, but it is preferable to use difunctional or multifunctional epoxy resins. Said difunctional or multifunctional epoxy resin may be one or more selected from the group consisting of bisphenol A epoxy resin, bisphenol S epoxy resin, tetraphenyl ethane epoxy resin and phenol novolak epoxy resin.

Said unsaturated polyester resin may be any one usually used in this field without being particularly restricted, and may be one obtained from condensation of a dicarboxylic acid and a polyhydric alcohol, and the like. Here, the dicarboxylic acid may be maleic acid, maleic acid anhydride or fumaric acid, or a mixture of two or more thereof, and the polyhydric alcohol may be ethylene glycol, diethylene glycol, triethylene glycol, propylene glycol, dipropylene glycol, tripropylene glycol, 1,4-butylene glycol, hydrogenated bisphenol A, trimethylolpropane monoarylether, neopentyl glycol, 2,2,4-trimethyl-1,3-pentanediol or glycerin, or a mixture of two or more thereof, but it is not limited to these.

The artificial stone according to the present invention may further comprise 0.1 to 10 parts by weight of a hardener, relative to 100 parts by weight of the base part. Said hardener may be any one usually used in the art without being particularly restricted, and may be, for example, one or more selected from the group consisting of diacyl peroxide, hydroperoxide, t-butylperoxy maleic acid, t-butylhydroperoxide, acetyl peroxide, lauroyl peroxide, azobisisobutyronitrile, azobisdimethylvaleronitrile, t-butylperoxyneodecanoate and t-amylperoxy 2-ethyl hexanoate.

One or more additives may be added to the base resin composition, selected from the group consisting of defoamers; organic or inorganic pigments or dyes; ultraviolet absorbers; phosphorus or inorganic metallic flame retardants; stearic or silicon releasing agents; cathecol or hydroquinone polymerization inhibitors; and phenolic, amine, quinone, sulfur or phosphorus antioxidants, in addition to the above additives, in an amount which does not affect the effects of the present invention.

The materials for the sieves used herein may depend on the materials of the desired artificial stones. For example, if cement-based artificial stones are prepared, it is preferable to use foams of metallic materials or resin foams having high specific gravity (2.4∼2.6). Also, if resin-based artificial stones are prepared, it is preferable to use foams having a specific gravity similar to that of Paste Binder. The reason is because when the artificial stones are prepared, vibration is applied, and sieves formed by foams may rise above the mould, when the specific gravity is different from each other.

The sieve may be made of meshes composed of metals or non-metals, or be formed in a foam shape foamed from a resin such as PE, PP, or PU.

In case of the foam shape foamed from a resin, it may consist of styrenic polymer, ethylenic polymer or alkali metal bicarbonate.

The sieve used herein may be attached to a resin film such as PE, PP, PET or PVC, or a mineral material such as glass fiber mat, using a usual adhesive and fixed to the bottom of the mould, instead of inserting and fixing the sieve directly into the mould.

As the method for forming patterns in the center of an artificial stone, a method of attaching the sieve to a resin film or a mineral material and then fixing it may be used.

As said resin film, a thermoplastic resin film such as polyester, polypropylene and polyamide, and preferably a film having smoothness and slipperiness at the same time, may be used.

For example, said glass fiber mat may be prepared by cutting glass fiber yarn treated with a thermoplastic resin to a size of 25 ∼ 50 mm, laminating the cut glass fiber yarn in a predetermined thickness, passing it through a high temperature oven to enhance adhesion of the glass fibers to themselves, removing moisture by drying, and additionally heating it to harden the thermoplastic resin.

### [Mode for Invention]

The present invention is explained by a preferred example in more detail below, but is not restricted to the example.

### Example

PP foam was cut to a size of 10 mmT×10 mmW×400 mmL and inserted into the bottom side of a mould having a size of 400 mmL×400 mmW×40 mmT. The foam had a pore size of 3 mm. Cement paste was introduced as an artificial stone binder into the mould having the PP foam, wherein the used cement paste was composed of 100 parts by weight of cement, 190 parts by weight of natural stone chips (large chips) having a diameter of about 5 mm, 80 parts by weight of natural stone chips (small chips) having a diameter of about 2 mm, 70 parts by weight of natural stone powder, 30 parts by weight of water and 2 parts by weight of water reducing agent.

The cement paste was poured into the mould, which was vibrated for 5 min using a vibrator, causing the natural chips to sink downwards in the mould, while bubbles were removed from the cement paste, followed by curing it at a constant temperature of 45 °C and constant humidity for 12 hours. After completing the curing, an artificial stone having a size of 400 mmL×400 mmW×20 mmT was prepared via the usual polishing and tailoring procedure for artificial stones.

## Claims

1. An artificial stone comprising:
a base part; and
a plurality of pattern parts formed on a surface of said base part,
wherein each pattern part is formed by chips having sizes different from each other.

2. The artificial stone according to Claim 1, wherein the chips are one or more selected from the group consisting of resin chips, glass chips, colored glass chips, natural stone chips and colored natural stone chips.

3. The artificial stone according to Claim 1, wherein the amount of chips is 240 to 350 parts by weight, relative to 100 parts by weight of the base part.

4. The artificial stone according to Claim 1, wherein the base part is formed by one or more selected from the group consisting of cements, acrylic resins, epoxy resins and unsaturated polyester resins.

5. The artificial stone according to Claim 4, wherein the base part further comprises one or more from the group consisting of a hardener, a defoamer and an additive.

6. A method for preparing an artificial stone comprising the steps of:
inserting a sieve into a mould and fixing it thereto, wherein the sieve consists of meshes having specific sizes forming one or more patterns;
pouring raw materials of the artificial stone, including chips having specific sizes, into the mould; and
vibrating the mould to sieve the chips and transfer the sieve patterns to a surface of the artificial stone.

7. The method for preparing an artificial stone according to Claim 6, wherein the sieve is formed by a polyethylene, polypropylene or polyurethane resin foam.
